# EUROPÄISCHE PATENTSCHRIFT

(11) **EP 4 296 627 B1**
(45) Veröffentlichungstag und Bekanntmachung des Hinweises auf die Patenterteilung: **30.07.2025**
(21) Anmeldenummer: 23180038.4
(22) Anmeldetag: 19.06.2023
(51) Int. Cl.: G01F 1/58, G01F 1/60

(54) **MAGNETFELDGENERATOR FÜR EIN MAGNETISCH-INDUKTIVES DURCHFLUSSMESSGERÄT, VERFAHREN ZUM BETREIBEN EINES SOLCHEN, MAGNETISCH-INDUKTIVES DURCHFLUSSMESSGERÄT UND VERFAHREN ZUM BETREIBEN EINES SOLCHEN**
MAGNETIC FIELD GENERATOR FOR A MAGNETIC INDUCTIVE FLOWMETER, METHOD FOR OPERATING SAME, MAGNETIC INDUCTIVE FLOWMETER AND METHOD FOR OPERATING SAME
GÉNÉRATEUR DE CHAMP MAGNÉTIQUE POUR UN DÉBITMÈTRE MAGNÉTO-INDUCTIF, PROCÉDÉ DE FONCTIONNEMENT D'UN TEL GÉNÉRATEUR, DÉBITMÈTRE MAGNÉTO-INDUCTIF ET PROCÉDÉ DE FONCTIONNEMENT D'UN TEL DÉBITMÈTRE

(30) Priorität: 20.06.2022 DE 102022115271
(43) Veröffentlichungstag der Anmeldung: 27.12.2023
(73) Patentinhaber: Krohne Messtechnik GmbH, 47058 Duisburg (DE)
(72) Erfinder: Brockhaus, Helmut, 46145 Oberhausen (DE); Dabrowski, Markus, 47269 Duisburg (DE)
(74) Vertreter: Gesthuysen Patentanwälte

(56) Entgegenhaltungen:
- EP-A1- 0 969 268
- CN-A- 111 765 931
- CN-B- 103 206 990
- DE-A1- 102017 107 417
- US-A- 4 916 381

## Beschreibung

Die Erfindung betrifft mehrere Gegenstände.

Ein Gegenstand der Erfindung ist ein Magnetfeldgenerator für ein magnetisch-induktives Durchflussmessgerät. Dieser weist eine Spule, eine Brückenschaltung mit mindestens einem Stromregler, einen Spannungsregler und eine Steuerung auf.

Ein weiterer Gegenstand ist ein Verfahren zum Betreiben eines Magnetfeldgenerators für ein magnetisch-induktives Durchflussmessgerät. Der Magnetfeldgenerator weist eine Spule, eine Brückenschaltung mit mindestens einem Stromregler, einen Spannungsregler und eine Steuerung auf.

Ein weiterer Gegenstand ist ein magnetisch-induktives Durchflussmessgerät. Dieses weist ein Messrohr, zwei Messelektroden, einen Magnetfeldgenerator und eine Steuerung auf. Der Magnetfeldgenerator weist eine Spule, eine Brückenschaltung mit mindestens einem Stromregler und einen Spannungsregler auf. Der Magnetfeldgenerator ist ausgebildet, mit der Spule ein Magnetfeld in einem im Messrohr strömenden Medium zu erzeugen, welches eine an den Messelektroden abgreifbare Messspannung in das Medium induziert. Im Betrieb des magnetisch-induktiven Durchflussmessgeräts wird ein Medium durch das Messrohr geströmt.

Schließlich ist ein weiterer Gegenstand der Erfindung ein Verfahren zum Betreiben eines magnetisch-induktiven Durchflussmessgeräts. Das magnetisch-induktive Durchflussmessgerät weist ein Messrohr, zwei Messelektroden, einen Magnetfeldgenerator und eine Steuerung auf. Der Magnetfeldgenerator weist eine Spule, eine Brückenschaltung mit mindestens einem Stromregler und einen Spannungsregler auf. Ein Medium wird durch das Messrohr geströmt.

Die Brückenschaltung ist zur Leitung eines Stroms durch die Spule in einer Richtung ausgebildet. Die Brückenschaltung und die Spule sind dementsprechend miteinander verschaltet. Die Richtung des Stroms ist entweder eine erste Richtung oder eine zweite Richtung. Die erste Richtung des Stroms durch die Spule ist der zweiten Richtung entgegengesetzt. Die Richtung ist der Brückenschaltung von der Steuerung vorgebbar. Die Brückenschaltung und die Steuerung sind dementsprechend ausgebildet.

Der Magnetfeldgenerator weist zwei Regler, und zwar den Stromregler und den Spannungsregler auf. Ein Regler regelt eine Regelgröße unter Verwendung einer Rückkopplung auf eine vorgegebene Führungsgröße im Rahmen von technischen Möglichkeiten. In einem Idealfall ist die Regelgröße in einem eingeschwungenen Zustand des Reglers gleich der Führungsgröße.

Der Stromregler ist zur Erzeugung des Stroms durch die Spule gemäß einem Sollstrom ausgebildet. Demnach ist der Sollstrom die Führungsgröße und der Strom durch die Spule die Regelgröße. Die Aufgabe des Stromreglers ist, dass der Strom dem Sollstrom entspricht. Der Sollstrom ist dem Stromregler von der Steuerung vorgebbar. Der Stromregler und die Steuerung sind dementsprechend ausgebildet. Der Stromregler stellt eine Stromquelle für die Spule dar.

Zu einem Regelbetrieb des Stromreglers ist eine über dem Stromregler anliegende Stromreglerspannung größer als ein oder gleich einem Regelspannungswert und zu einem Minimalbetrieb des Stromreglers ist die Stromreglerspannung größer als ein Minimalspannungswert. Dabei ist der Regelspannungswert größer als der Minimalspannungswert. Wenn die anliegende Stromreglerspannung größer als der Minimalspannungswert ist, dann arbeitet der Stromregler im Minimalbetrieb. Wenn die anliegende Stromreglerspannung sogar größer als der Regelspannungswert ist, dann arbeitet der Stromregler im Regelbetrieb. Im Minimalbetrieb ist eine Fähigkeit des Stromreglers, den Strom auf den Sollstrom zu regeln, in Bezug auf den Regelbetrieb eingeschränkt.

Der Spannungsregler ist zur Erzeugung einer Versorgungsspannung über der Brückenschaltung gemäß einer Sollspannung ausgebildet. Bei diesem Regler ist die Sollspannung die Führungsgröße und die Versorgungsspannung die Regelgröße. Die Aufgabe des Reglers ist, dass die Versorgungsspannung der Sollspannung entspricht. Die Sollspannung ist dem Spannungsregler von der Steuerung vorgebbar. Die Steuerung und der Spannungsregler sind dementsprechend ausgebildet. Der Spannungsregler stellt eine Spannungsquelle dar und ist elektrisch parallel zur Brückenschaltung geschaltet.

In Bezug auf den Gegenstand des Magnetfeldgenerators ist die Steuerung ausgebildet, in einem ersten Umkehrzeitpunkt die erste Richtung, einen Sollstromwert als Sollstrom und einen ersten Sollspannungswert als Sollspannung vorzugeben.

In Bezug auf den Gegenstand des Verfahrens zum Betreiben eines Magnetfeldgenerators wird von der Steuerung in einem Verfahrensschritt in einem ersten Umkehrzeitpunkt die erste Richtung, ein Sollstromwert als Sollstrom und ein erster Sollspannungswert als Sollspannung vorgegeben.

In Bezug auf den Gegenstand des magnetisch-induktiven Durchflussmessgeräts ist die Steuerung ausgebildet, in einem ersten Umkehrzeitpunkt die erste Richtung, einen Sollstromwert und einen ersten Sollspannungswert vorzugeben. Weiter ist die Steuerung ausgebildet, nach einem ersten Schaltzeitpunkt und vor einem zweiten Umkehrzeitpunkt eine zwischen den Messelektroden anliegende erste Messspannung zu messen und unter Verwendung der ersten Messspannung einen Durchfluss eines Mediums durch das Messrohr zu bestimmen.

In Bezug auf den Gegenstand des Verfahrens zum Betreiben eines magnetisch-induktiven Durchflussmessgeräts wird von der Steuerung in einem Verfahrensschritt in einem ersten Umkehrzeitpunkt die erste Richtung, ein Sollstromwert und ein erster Sollspannungswert vorgegeben. In einem weiteren Verfahrensschritt wird von der Steuerung nach einem ersten Schaltzeitpunkt und vor einem zweiten Umkehrzeitpunkt eine zwischen den Messelektroden anliegende erste Messspannung gemessen und wird unter Verwendung der ersten Messspannung ein Durchfluss des Mediums bestimmt, wobei die Messspannung im Medium durch ein von der Spule im strömenden Medium erzeugtes Magnetfeld bewirkt wird. Das magnetisch-induktive Durchflussmessgerät ist zur Ausführung dieser Verfahrensschritte ausgebildet und führt diese Verfahrensschritte im Betrieb auch aus.

In einem Umkehrzeitpunkt, wie dem ersten Umkehrzeitpunkt, wird durch die Brückenschaltung die Richtung des Stroms durch die Spule umgekehrt. Wenn vor einem Umkehrzeitpunkt die Richtung die erste Richtung ist, dann ist nach dem Umkehrzeitpunkt die Richtung die zweite Richtung. Im ersten Umkehrzeitpunkt wird der Brückenschaltung von der Steuerung die erste Richtung als die Richtung des Stroms durch die Spule vorgeben. Weiter wird in einem Umkehrzeitpunkt von der Steuerung dem Stromregler der Sollstromwert als der Sollstrom und dem Spannungsregler der erste Sollspannungswert als die Sollspannung vorgegeben. Danach regelt der Stromregler den Strom auf den Sollstromwert und regelt der Spannungsregler die Versorgungsspannung auf den ersten Sollspannungswert. Dabei ist der erste Sollspannungswert größer als ein zweiter Sollspannungswert und bewirkt der zweite Sollspannungswert den Regelspannungswert der Stromreglerspannung in einem eingeschwungenen Zustand des Magnetfeldgenerators.

Der Strom durch die Spule erzeugt ein Magnetfeld. Im eingeschwungenen Zustand des Magnetfeldgenerators ist das Magnetfeld ausreichend konstant, sodass z. B. Messungen unter Verwendung des Magnetfelds mit einer ausreichenden Genauigkeit ausgeführt werden können. In Bezug auf das magnetisch-induktive Durchflussmessgerät und das Verfahren zum Betreiben eines magnetisch-induktiven Durchflussmessgeräts bedeutet das, dass das Magnetfeld in einem durch das Messrohr strömenden Medium eine Messspannung induziert, diese Messspannung von der Steuerung mit den beiden Messelektroden gemessen und aus der Messspannung von der Steuerung ein Durchfluss des Mediums durch das Messrohr mit ausreichender Genauigkeit bestimmt wird.

Aus dem Stand der Technik ist bekannt, dass von der Steuerung in einem Schaltzeitpunkt, wie dem ersten Schaltzeitpunkt, der immer nach einem Umkehrzeitpunkt liegt, der zweite Sollspannungswert als Sollspannung dem Spannungsregler vorgeben wird. Der Schaltzeitpunkt ist dabei dadurch ausgezeichnet, dass der Strom in diesem den Sollstromwert erreicht. Bei in der Praxis eingesetzten Spulen tritt das Problem auf, dass in dem Schaltzeitpunkt eine Spannung über der Spule noch keine ausreichende Konstanz aufweist. Dadurch weist auch das von der Spule erzeugte Magnetfeld noch keine ausreichende Konstanz auf und es muss gewartet werden, bis das Magnetfeld eine ausreichende Konstanz aufweist. Es ist erkannt worden, dass eine Ursache für das Problem Wirbelströme sind, die ab dem Umkehrzeitpunkt durch die Umkehrung des Stroms durch die Spule entstehen. **In** der EP 0 969 268 A1 bzw. in der DE 10 2017 107417 A1 ist diesbezüglich vorgeschlagen, den Spulenstrom über eine Regelung der über die Brückenschaltung anliegende Spannung vorzunehmen.

Es ist ein alternativer zweiter Sollspannungswert bestimmbar, der größer als der zweite Sollspannungswert und für gewöhnlich kleiner als der erste Sollspannungswert ist, und, wenn er im Schaltzeitpunkt dem Spannungsregler vorgegeben wird, das beschriebene Problem löst. Jedoch erfüllt er ein Kriterium der gesuchten Lösung nicht. Und zwar bewirkt der alternative zweite Sollspannungswert eine höhere Verlustleistung als der zweite Sollspannungswert, da er größer ist als dieser. Eine Lösung, die eine höhere Verlustleistung aufgrund eines höheren zweiten Sollspannungswerts ab dem ersten Schaltzeitpunkt bewirkt, ist hier nicht gesucht.

Es ist auch ein fester alternativer Schaltzeitpunkt bestimmbar, der nach dem zuvor beschriebenen Schaltzeitpunkt liegt, und, wenn alternative Schaltzeitpunkt von der Steuerung statt des Schaltzeitpunkts verwendet wird, das beschriebene Problem löst. Jedoch erfüllt der alternative Schaltzeitpunkt ein weiteres Kriterium der gesuchten Lösung nicht. Und zwar bewirkt das feste längere Vorgeben der ersten Sollspannung eine längere Dauer einer höheren Verlustleistung, als wenn der zuvor beschriebene Schaltzeitpunkt verwendet wird. Eine Lösung, die eine feste längere Dauer der höheren Verlustleistung aufgrund eines zeitlich nach hinten verschobenen Schaltzeitpunkts bewirkt, ist hier nicht gesucht. Stattdessen ist eine adaptive Lösung gesucht.

Aufgabe der vorliegenden Erfindung ist die Angabe einer Lösung des beschriebenen Problems bei gleichzeitiger Erfüllung der beschriebenen Kriterien.

Die Aufgabe ist durch jeden der Gegenstände der Erfindung jeweils gelöst.

So ist die Aufgabe durch ein Verfahren zum Betreiben eines Magnetfeldgenerators mit den Merkmalen von Anspruch 1 gelöst. Dementsprechend wird das zuvor beschriebene Verfahren zum Betreiben eines Magnetfeldgenerators durch das nachfolgend beschriebene modifizierte Verfahren mit den folgenden Verfahrensschritten ersetzt, die von der Steuerung ausgeführt werden:
- In einem ersten Verfahrensschritt werden in einem ersten Umkehrzeitpunkt die erste Richtung, ein Sollstromwert als Sollstrom und ein erster Sollspannungswert als Sollspannung vorgegeben, wobei der erste Sollspannungswert größer als ein zweiter Sollspannungswert ist und der zweite Sollspannungswert als Sollspannung den Regelspannungswert der Stromreglerspannung in einem eingeschwungenen Zustand des Magnetfeldgenerators bewirkt.
- In einem zweiten Verfahrensschritt wird ein erster Schaltzeitpunkt bestimmt, welcher dadurch ausgezeichnet ist, dass er nach dem ersten Umkehrzeitpunkt liegt, der Strom zwischen dem ersten Umkehrzeitpunkt und dem ersten Schaltzeitpunkt den Sollstromwert erreicht und die Stromreglerspannung im ersten Schaltzeitpunkt größer als der Minimalspannungswert und kleiner als der Regelspannungswert ist, und wird im ersten Schaltzeitpunkt der zweite Sollspannungswert als Sollspannung vorgegeben.

Bei einem beschriebenen Magnetfeldgenerator mit einer Spule, die das zuvor beschriebene Problem aufweist, bewirkt das Verfahren im Vergleich zum beschriebenen Stand der Technik, dass die Spannung über der Spule im Schaltzeitpunkt eine ausreichende Konstanz aufweist, sodass z. B. sogleich Messungen unter Verwendung des von der Spule erzeugten Magnetfelds mit ausreichender Genauigkeit ausgeführt werden können.

Weiter ist bei Verwendung des Verfahrens keine Vergrößerung des zweiten Sollspannungswerts erforderlich. Der erste Schaltzeitpunkt ist adaptiv bestimmt und liegt für gewöhnlich näher am ersten Umkehrzeitpunkt als im beschriebenen Stand der Technik. Das Verfahren gilt allgemein für Schaltzeitpunkte wie den ersten Schaltzeitpunkt und für Umkehrzeitpunkte wie den ersten Umkehrzeitpunkt. Durch das Verfahren ist auch eine Leistungsaufnahme des Magnetfeldgenerators reduziert.

In einer Ausgestaltung des Verfahrens zum Betreiben eines Magnetfeldgenerators werden von der Steuerung die folgenden Verfahrensschritte in Anschluss an den zweiten Verfahrensschritt ausgeführt:
- In einem dritten Verfahrensschritt werden in einem zweiten Umkehrzeitpunkt die zweite Richtung und der erste Sollspannungswert als Sollspannung vorgegeben.
- In einem vierten Verfahrensschritt wird ein zweiter Schaltzeitpunkt bestimmt, welcher dadurch gekennzeichnet ist, dass der zweite Schaltzeitpunkt nach dem zweiten Umkehrzeitpunkt liegt, der Strom zwischen dem zweiten Umkehrzeitpunkt und dem zweiten Schaltzeitpunkt den Sollstromwert erreicht und die Stromreglerspannung im zweiten Schaltzeitpunkt größer als der Minimalspannungswert und kleiner als der Regelspannungswert ist, und wird im zweiten Schaltzeitpunkt der zweite Sollspannungswert als Sollspannung vorgegeben.

Diese vier Verfahrensschritte sind ein voller Zyklus des Verfahrens. Danach kann ein neuer Zyklus beginnen. In einer Ausgestaltung werden der erste Verfahrensschritt, der zweite Verfahrensschritt, der dritte Verfahrensschritt und der vierte Verfahrensschritt mindestens zwei Mal in dieser Reihenfolge ausgeführt. Danach liegen zwei volle Zyklen des Verfahrens vor.

Die Aufgabe ist auch durch ein Verfahren zum Betreiben eines magnetisch-induktiven Durchflussmessgeräts mit den Merkmalen von Anspruch 4 gelöst. Dementsprechend wird das zuvor beschriebene Verfahren zum Betreiben eines magnetisch-induktiven Durchflussmessgeräts durch das nachfolgend beschriebene modifizierte Verfahren mit den folgenden Verfahrensschritten ersetzt, die von der Steuerung ausgeführt werden:
- In einem ersten Verfahrensschritt werden in einem ersten Umkehrzeitpunkt die erste Richtung, ein Sollstromwert und ein erster Sollspannungswert vorgegeben, wobei der erste Sollspannungswert größer als ein zweiter Sollspannungswert ist und der zweite Sollspannungswert den Regelspannungswert der Stromreglerspannung in einem eingeschwungenen Zustand des Magnetfeldgenerators bewirkt.
- In einem zweiten Verfahrensschritt wird ein erster Schaltzeitpunkt bestimmt, welcher dadurch ausgezeichnet ist, dass er nach dem ersten Umkehrzeitpunkt liegt, der Strom zwischen dem ersten Umkehrzeitpunkt und dem ersten Schaltzeitpunkt den Sollstromwert erreicht und die Stromreglerspannung im ersten Schaltzeitpunkt größer als der Minimalspannungswert und kleiner als der Regelspannungswert ist, und wird im ersten Schaltzeitpunkt der zweite Sollspannungswert als Sollspannung vorgegeben.
- In einem dritten Verfahrensschritt wird nach dem ersten Schaltzeitpunkt und vor einem zweiten Umkehrzeitpunkt eine zwischen den Messelektroden anliegende erste Messspannung gemessen und unter Verwendung der ersten Messspannung ein Durchfluss des Mediums bestimmt, wobei die Messspannung im Medium durch ein von der Spule im strömenden Medium erzeugtes Magnetfeld bewirkt wird.

In einer Ausgestaltung des Verfahrens zum Betreiben eines magnetisch-induktiven Durchflussmessgeräts werden von der Steuerung die folgenden Verfahrensschritte in Anschluss an den dritten Verfahrensschritt ausgeführt:
- In einem vierten Verfahrensschritt werden im zweiten Umkehrzeitpunkt die zweite Richtung und der erste Sollspannungswert als Sollspannung vorgegeben.
- In einem fünften Verfahrensschritt wird ein zweiter Schaltzeitpunkt bestimmt, welcher dadurch gekennzeichnet ist, dass der zweite Schaltzeitpunkt nach dem zweiten Umkehrzeitpunkt liegt, der Strom zwischen dem zweiten Umkehrzeitpunkt und dem zweiten Schaltzeitpunkt den Sollstromwert erreicht und die Stromreglerspannung im zweiten Schaltzeitpunkt größer als der Minimalspannungswert und kleiner als der Regelspannungswert ist, und wird im zweiten Schaltzeitpunkt der zweite Sollspannungswert als Sollspannung vorgegeben.
- In einem sechsten Verfahrensschritt wird nach dem zweiten Schaltzeitpunkt eine zwischen den Messelektroden anliegende zweite Messspannung gemessen und unter Verwendung der ersten Messspannung und der zweiten Messspannung ein Durchfluss des Mediums bestimmt, wobei die zweite Messspannung im Medium durch ein von der Spule im strömenden Medium erzeugtes Magnetfeld bewirkt wird.

Diese sechs Verfahrensschritte sind ein voller Zyklus des Verfahrens. Danach kann ein neuer Zyklus beginnen. In einer weiteren Ausgestaltung werden der erste Verfahrensschritt, der zweite Verfahrensschritt, der dritte Verfahrensschritt, der vierte Verfahrensschritt, der fünfte Verfahrensschritt und der sechste Verfahrensschritt mindestens zwei Mal in dieser Reihenfolge ausgeführt. Danach liegen zwei volle Zyklen des Verfahrens vor.

Die folgenden Ausgestaltungen betreffen sowohl das Verfahren zum Betreiben eines Magnetfeldgenerators als auch das Verfahren zum Betreiben eines magnetisch-induktiven Durchflussmessgeräts.

In einer dieser Ausgestaltungen wird von der Steuerung der mindestens eine Schaltzeitpunkt iterativ bestimmt, indem ein zeitlicher Abstand zwischen dem mindestens einen Umkehrzeitpunkt und dem mindestens einen Schaltzeitpunkt schrittweise reduziert wird, bis die Stromreglerspannung im mindestens einen Schaltzeitpunkt größer als der Minimalspannungswert und kleiner als der Regelspannungswert ist, vorzugsweise gleich dem Minimalspannungswert ist.

In einer weiteren dieser Ausgestaltungen liegt der Regelspannungswert zwischen 2,5 V und 3,5 V, vorzugsweise bei 3 V liegt.

Schließlich liegt in einer weiteren dieser Ausgestaltungen der Minimalspannungswert zwischen 1,5 V und 2,5 V, vorzugsweise bei 2 V.

Neben den beiden zuvor beschriebenen Verfahren ist die Aufgabe auch durch die im Folgenden beschriebenen Vorrichtungen gelöst.

So ist die Aufgabe durch einen Magnetfeldgenerator mit den Merkmalen von Anspruch 10 gelöst.

Dieser ist dadurch gekennzeichnet, dass die Steuerung ausgebildet ist, einen ersten Schaltzeitpunkt zu bestimmen, welcher dadurch ausgezeichnet ist, dass er nach dem ersten Umkehrzeitpunkt liegt, der Strom zwischen dem ersten Umkehrzeitpunkt und dem ersten Schaltzeitpunkt den Sollstromwert erreicht und die Stromreglerspannung im ersten Umkehrzeitpunkt größer als der Minimalspannungswert und kleiner als der Regelspannungswert ist, und im ersten Schaltzeitpunkt dann den zweiten Sollspannungswert als Sollspannung vorzugeben.

In einer Ausgestaltung des Magnetfeldgenerators weist die Brückenschaltung einen ersten Zweig mit einem Stromregler und einen zweiten Zweig mit einem Stromregler auf. Vorzugsweise sind die Stromregler durch die Steuerung schaltbar ausgebildet.

In einer weiteren Ausgestaltung ist die Steuerung zur Ausführung eines der zuvor beschriebenen Verfahren zum Betreiben eines Magnetfeldgenerators ausgebildet.

Die Aufgabe ist schließlich auch durch ein magnetisch-induktives Durchflussmessgerät mit den Merkmalen von Anspruch 12 gelöst.

Dieses ist dadurch gekennzeichnet, dass die Steuerung weiter ausgebildet ist, den ersten Schaltzeitpunkt zu bestimmen, welcher dadurch ausgezeichnet ist, dass er nach dem ersten Umkehrzeitpunkt liegt, der Strom zwischen dem ersten Umkehrzeitpunkt und dem ersten Schaltzeitpunkt den Sollstromwert erreicht und die Stromreglerspannung im ersten Schaltzeitpunkt größer als Minimalspannungswert und kleiner als der Regelspannungswert ist, und im ersten Schaltzeitpunkt dann den zweiten Sollspannungswert als Sollspannung vorzugeben.

In einer Ausgestaltung des magnetisch-induktiven Durchflussmessgeräts weist die Brückenschaltung des Magnetfeldgenerators einen ersten Zweig mit einem Stromregler und einen zweiten Zweig mit einem Stromregler auf. Vorzugsweise sind die Stromregler durch die Steuerung schaltbar ausgebildet.

In einer weiteren Ausgestaltung ist die Steuerung zur Ausführung eines der zuvor beschriebenen Verfahren zum Betreiben eines magnetisch-induktiven Durchflussmessgeräts ausgebildet.

Unbeschadet der vorstehenden Ausführungen gelten die Ausführungen zu einem Gegenstand der Erfindung entsprechend für die übrigen Gegenstände der Erfindung entsprechend.

Im Einzelnen ist eine Vielzahl an Möglichkeiten gegeben, die Gegenstände der Erfindung auszugestalten und weiterzubilden. Dazu wird verwiesen zum einen auf die den unabhängigen Ansprüchen nachgeordneten Ansprüche und zum anderen auf die nachfolgende Beschreibung eines bevorzugten Ausführungsbeispiels in Verbindung mit der Zeichnung. In der Zeichnung zeigt
- Figur 1: ein Ausführungsbeispiel eines magnetisch-induktiven Durchflussmessgeräts in einer Seitenansicht,
- Figur 2: das Ausführungsbeispiel in einer geschnittenen Vorderansicht,
- Figur 3a: ein erstes Ausführungsbeispiel eines abstrahierten Stromlaufplans des Magnetfeldgenerators,
- Figur 3b: ein zweites Ausführungsbeispiel eines abstrahierten Stromlaufplan des Magnetfeldgenerators,
- Figur 4: einen Ablaufplan eines Ausführungsbeispiels eines Verfahrens zum Betreiben eines magnetisch-induktiven Durchflussmessgeräts,
- Figur 5a: einen zeitlichen Verlauf einer Versorgungsspannung bei Ausführung des Verfahrens,
- Figur 5b: einen zeitlichen Verlauf einer Stromreglerspannung bei Ausführung des Verfahrens und
- Figur 5c: einen zeitlichen Verlauf eines Stroms bei Ausführung des Verfahrens.

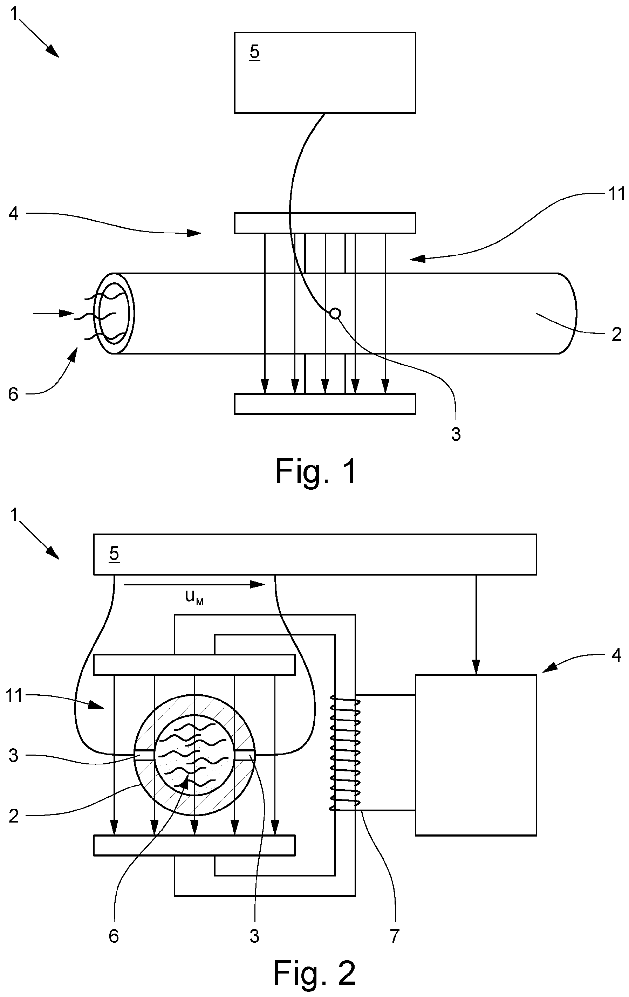

Die Figuren 1 und 2 zeigen in unterschiedlichen Ansichten eine abstrahierte Darstellung wesentlicher Komponenten eines Ausführungsbeispiels eines magnetisch-induktiven Durchflussmessgeräts 1. Figur 1 zeigt das magnetisch-induktive Durchflussmessgerät 1 in einer Seitenansicht und Figur 2 in einer geschnittenen Vorderansicht. Das magnetisch-induktive Durchflussmessgerät 1 weist ein Messrohr 2, zwei Messelektroden 3, einen Magnetfeldgenerator 4 und eine Steuerung 5 auf. Das magnetisch-induktive Durchflussmessgerät 1 ist im Betrieb, weshalb auch ein Medium 6 durch das Messrohr 2 geströmt wird.

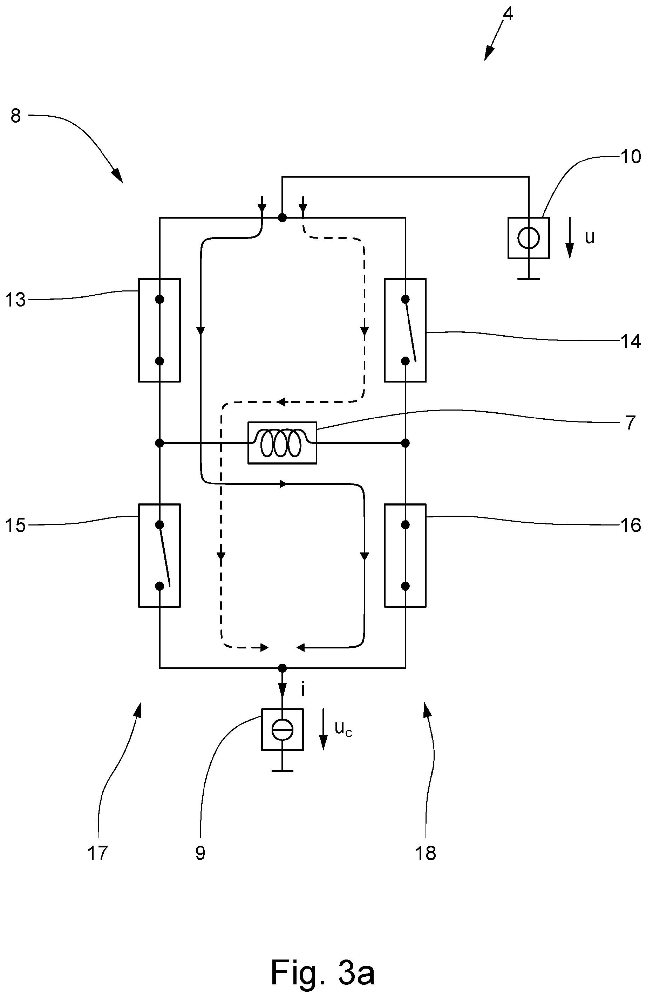

Figur 3a zeigt ein erstes Ausführungsbeispiel eines abstrahierten Stromlaufplans mit wesentlichen Komponenten des Magnetfeldgenerators 4. Wenn der Magnetfeldgenerator 4 ein eigenständiges Gerät und nicht Teil eines anderen Geräts ist, hier ist er Teil des magnetisch-induktiven Durchflussmessgeräts 1, dann weist er zusätzlich noch eine Steuerung auf. Die Steuerung des eigenständigen Magnetfeldgenarators ist dann ausgebildet wie die Steuerung 5 in Bezug auf den Magnetfeldgenerator 4. Der Magnetfeldgenerator 4 weist eine Spule 7, eine Brückenschaltung 8 mit einem Stromregler 9 und einen Spannungsregler 10 auf. Der Magnetfeldgenerator 4 ist ausgebildet, mit der Spule 7, ein Magnetfeld 11 in dem im Messrohr 2 strömenden Medium 6 zu erzeugen. Dazu wird in diesem Ausführungsbeispiel das Magnetfeld 11 von einem Joch 12 geführt. Das Magnetfeld 11 induziert an den Messelektroden 3 eine abgreifbare Messspannung u_{M} in das strömende Medium 6.

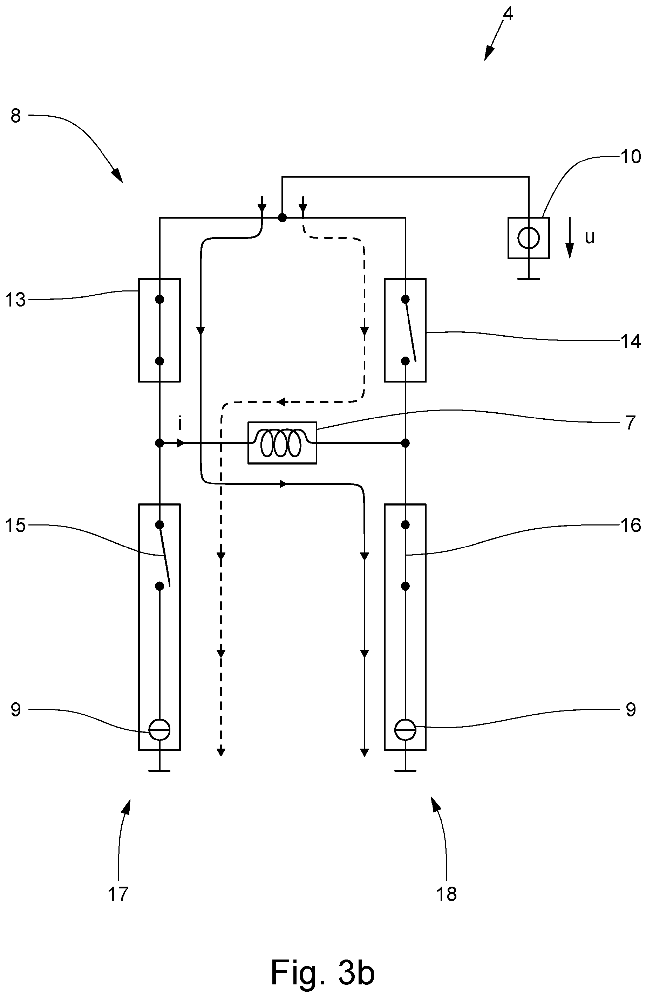

Die Brückenschaltung 8 ist zur Leitung eines Stroms i durch die Spule 7 in einer Richtung ausgebildet. Dazu weist sie einen ersten Schalter 13, einen zweiten Schalter 14, einen dritten Schalter 15 und einen vierten Schalter 16 auf. Weiter weist die Brückenschaltung 8 einen ersten Zweig 17 und einen zweiten Zweig 18 auf. Der erste Schalter 13 und der dritte Schalter 15 liegen im ersten Zweig 17 und der zweite Schalter 14 und der vierte Schalter 16 liegen im zweiten Zweig 18. Die Richtung ist der Brückenschaltung 8 von der Steuerung 5 vorgebbar, indem die Steuerung 5 zur Ansteuerung der Schalter 13 bis 16 ausgebildet ist. Die Richtung ist entweder eine erste Richtung oder eine zweite Richtung. Die erste Richtung ist dadurch vorgegeben, dass der erste Schalter 13 und der vierte Schalter 16 geschlossen und der zweite Schalter 14 und der dritte Schalter 15 offen sind. Sie ist vorliegend durch eine durchgezogene Linie mit Pfeilspitzen dargestellt. Die zweite Richtung ist dadurch vorgegeben, dass der erste Schalter 13 und der vierte Schalter 16 offen und der zweite Schalter 14 und der dritte Schalter 15 geschlossen sind. Sie ist vorliegend durch eine gestrichelte Linie mit Pfeilspitzen dargestellt. Figur 3 zeigt die erste Richtung des Stroms i. Sie ist der zweiten Richtung entgegengesetzt.

Der Stromregler 9 ist zur Erzeugung des Stroms i gemäß einem Sollstrom durch die Spule 7 ausgebildet. Der Sollstrom ist dem Stromregler von der Steuerung 5 vorgebbar. Der Stromregler 9 stellt eine Stromquelle für die Spule 7 dar.

Der Stromregler 9 arbeitet entweder in einem Regelbetrieb oder in einem Minimalbetrieb. Der Stromregler 9 arbeitet im Regelbetrieb, wenn eine über dem Stromregler 9 anliegende Stromreglerspannung u_{C} größer als ein oder gleich einem Regelspannungswert U_{C,R} ist und arbeitet in einem Minimalbetrieb, wenn die Stromreglerspannung u_{C} größer als ein Minimalspannungswert U_{C,M} ist. Dabei ist der Regelspannungswert U_{C,R} größer als der Minimalspannungswert U_{C,M}. Im Minimalbetrieb ist eine Fähigkeit des Stromreglers 9, den Strom i auf einen Sollstrom zu regeln, in Bezug auf den Regelbetrieb eingeschränkt.

Der Spannungsregler 10 ist zur Erzeugung einer Versorgungsspannung u gemäß einer Sollspannung über der Brückenschaltung 8 ausgebildet. Die Sollspannung ist dem Spannungsregler 10 von der Steuerung 5 vorgebbar. Der Spannungsregler 10 stellt eine Spannungsquelle dar und ist elektrisch parallel zur Brückenschaltung 8 geschaltet.

Figur 3b zeigt ein zweites Ausführungsbeispiel eines abstrahierten Stromlaufplans mit wesentlichen Komponenten des Magnetfeldgenerators 4. Der Magnetfeldgenerator 4 weist eine Spule 7, eine Brückenschaltung 8 und einen Spannungsregler 10 auf. Die Brückenschaltung 8 weist einen ersten Schalter 13, einen zweiten Schalter 14, einen dritten Schalter 15 und einen vierten Schalter 16 auf. Weiter weist die Brückenschaltung 8 einen ersten Zweig 17 und einen zweiten Zweig 18 auf. Der erste Schalter 13 und der dritte Schalter 15 liegen im ersten Zweig 17 und der zweite Schalter 14 und der vierte Schalter 16 liegen im zweiten Zweig 18. Weiter liegt im ersten Zweig 17 ein Stromregler 9 und im zweiten Zweig 18 ein Stromregler 9. Der Stromregler 9 im ersten Zweig 17 ist durch den dritten Schalter 15 und der Stromregler 9 im zweiten Zweig 18 ist durch den vierten Schalter 16 schaltbar durch die Steuerung 5 ausgebildet. In diesem Sinne sind die Stromregler 9 schaltbar und als Einheit mit dem jeweiligen Schalter 15 bzw 16 dargestellt. In einer dazu alternativen Ausgestaltung, ist der Stromregler 9 selbst im ersten Zweig 17 durch den dritten Schalter 15 ein- und ausschaltbar und ist der Stromregler 9 selbst im zweiten Zweig 18 durch den vierten Schalter 16 ein und ausschaltbar.

Die Brückenschaltung 8 ist zur Leitung eines Stroms i durch die Spule 7 in einer Richtung ausgebildet. Die Richtung ist der Brückenschaltung 8 von der Steuerung 5 vorgebbar, indem die Steuerung 5 zur Ansteuerung der Schalter 13 bis 16 ausgebildet ist. Die Richtung ist entweder eine erste Richtung oder eine zweite Richtung. Die erste Richtung ist hier dadurch vorgegeben, dass der erste Schalter 13 und der vierte Schalter 16 geschlossen und der zweite Schalter 14 und der dritte Schalter 15 offen sind. Sie ist vorliegend durch eine durchgezogene Linie mit Pfeilspitzen dargestellt. Die zweite Richtung ist dadurch vorgegeben, dass der erste Schalter 13 und der vierte Schalter 16 offen und der zweite Schalter 14 und der dritte Schalter 15 geschlossen sind. Sie ist vorliegend durch eine gestrichelte Linie mit Pfeilspitzen dargestellt. Figur 3b zeigt die erste Richtung des Stroms i. Sie ist der zweiten Richtung entgegengesetzt.

Die Stromregler 9 sind zur Erzeugung des Stroms i gemäß einem Sollstrom durch die Spule ausgebildet. Der Sollstrom ist den Stromreglern 9 von der Steuerung 5 vorgebbar. Die Stromregler 9 stellen jeweils eine Stromquelle für die Spule 7 dar.

Ansonsten gelten die Ausführungen zum ersten Ausführungsbeispiel eines abstrahierten Stromlaufplans analog für das zweite Ausführungsbeispiel.

Die Steuerung 5 ist ausgebildet, in einem ersten Umkehrzeitpunkt t_{U,1} die erste Richtung, einen Sollstromwert I_{S} und einen ersten Sollspannungswert U_{S,1} vorzugeben. Dabei ist der erste Sollspannungswert U_{S,1} größer als ein zweiter Sollspannungswert U_{S,2} und bewirkt der zweite Sollspannungswert U_{S,2} als Sollspannung den Regelspannungswert U_{C,R} der Stromreglerspannung u_{C} in einem eingesprungenen Zustand des Magnetfeldgenerators 4.

Die Steuerung 5 ist weiter ausgebildet, nach einem ersten Schaltzeitpunkt t_{S,1} und vor einem zweiten Umkehrzeitpunkt t_{U,2} einen zwischen den Messelektroden 3 anliegende ersten Messspannungswert u_{M,1} der Messspannung u_{M} zu messen und unter Verwendung des ersten Messspannungswerts u_{M,1} einen Durchfluss des Mediums 6 durch das Messrohr 2 zu bestimmen.

Weiter ist die Steuerung 5 ausgebildet, den ersten Schaltzeitpunkt t_{S,1} zu bestimmen, welcher dadurch ausgezeichnet ist, dass er nach dem ersten Umkehrzeitpunkt t_{U,1} liegt, der Strom i zwischen dem ersten Umkehrzeitpunkt und dem ersten Schaltzeitpunkt den Sollstromwert I_{S} erreicht und die Stromreglerspannung u_{C} im ersten Schaltzeitpunkt größer als der Minimalspannungswert U_{C,M} und kleiner als der Regelspannungswert U_{C,M} ist, und dann im ersten Schaltzeitpunkt t_{S,1} den zweiten Sollspannungswert U_{S,2} als Sollspannung vorzugeben.

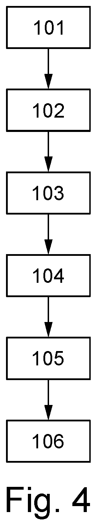

Figur 4 zeigt einen Ablaufplan eines Ausführungsbeispiels eines Verfahrens zum Betreiben des magnetisch-induktiven Durchflussmessgeräts 1. Die Steuerung 5 ist ausgebildet, dieses Verfahren auszuführen, und führt es auch aus, da das magnetisch-induktive Durchflussmessgerät 1 im Betrieb ist.

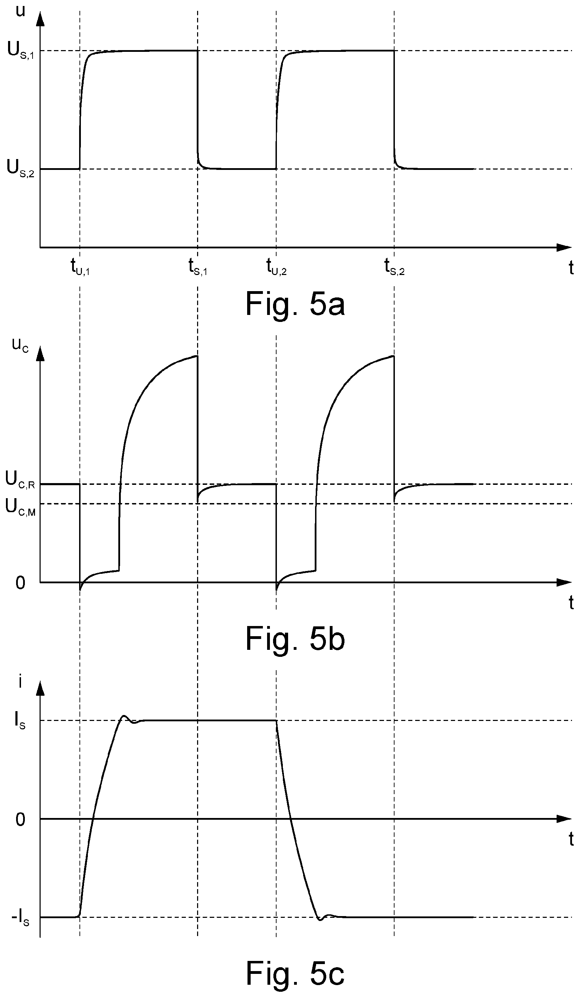

Figur 5 zeigt zeitliche Verläufe von Signalen bei Ausführung des Verfahrens. Und zwar Figur 5a einen zeitlichen Verlauf der Versorgungsspannung u, Figur 5b einen zeitlichen Verlauf der Stromreglerspannung u_{C} und Figur 5c einen zeitlichen Verlauf des Stroms i.

In einem ersten Verfahrensschritt 101 werden im ersten Umkehrzeitpunkt t_{U,1} die erste Richtung, der Sollstromwert I_{S} und der erste Sollspannungswert U_{S,1} vorgegeben. Zuvor war in diesem Ausführungsbeispiel der zweite Sollspannungswert U_{S,2} vorgegeben.

In einem zweiten Verfahrensschritt 102 wird der erste Schaltzeitpunkt t_{S,1} bestimmt und wird in diesem der zweite Sollspannungswert U_{S,2} als Sollspannung vorgegeben.

In einem dritten Verfahrensschritt 103 wird nach dem ersten Schaltzeitpunkt t_{S,1} und vor dem zweiten Umkehrzeitpunkt t_{U,2} der zwischen den Messelektroden 3 anliegende erste Messspannungswert u_{M,1} der Messspannung u_{M} gemessen und unter Verwendung des ersten Messspannungswerts u_{M,1} ein Durchfluss des Mediums 6 durch das Messrohr 2 bestimmt.

In einem vierten Verfahrensschritt 104 werden im zweiten Umkehrzeitpunkt t_{U,2} die zweite Richtung und der erste Sollspannungswert U_{S,1} als Sollspannung vorgegeben.

In einem fünften Verfahrensschritt 105 wird ein zweiter Schaltzeitpunkt t_{S,2} bestimmt, welcher dadurch ausgezeichnet ist, dass der zweite Schaltzeitpunkt t_{S,2} nach dem zweiten Umkehrzeitpunkt t_{U,2} liegt, der Strom i zwischen dem zweiten Umkehrzeitpunkt t_{U,2} und dem zweiten Schaltzeitpunkt t_{S.2} den Sollstromwert I_{S} erreicht und die Stromreglerspannung u_{C} im zweiten Schaltzeitpunkt t_{S,2} größer als der Minimalspannungswert U_{C,M} und kleiner als der Regelspannungswert U_{C,R} ist, und wird im zweiten Schaltzeitpunkt t_{S,2} der zweite Sollspannungswert U_{S,2} als Sollspannung vorgegeben.

Allgemein sind in einem Schaltzeitpunkt t_{S}, in diesem Ausführungsbeispiel also im ersten Schaltzeitpunkt t_{S,1} und im zweiten Schaltzeitpunkts t_{S,2}, drei Bedingungen erfüllt. Erstens liegt der Schaltzeitpunkt nach dem unmittelbar vorausgehenden Umkehrzeitpunkt t_{U}. In diesem Ausführungsbeispiel gibt es den ersten Umkehrzeitpunkt t_{U,1} und den zweiten Umkehrzeitpunkt t_{U,2}. Zweitens erreicht der Strom i zwischen dem Umkehrzeitpunkt t_{U} und dem Schaltzeitpunkt t_{S} den Sollstromwert I_{S}. Drittens ist die Stromreglerspannung u_{C} im Schaltzeitpunkt t_{S} größer als der Minimalspannungswert U_{C,M} und kleiner als der Regelspannungswert U_{C,R}. Für die dritte Bedingung gilt, dass bereits die Wirkung des Umschaltens der Sollspannung von dem ersten Sollspannungswert U_{S,1} auf den zweiten Sollspannungswert U_{S,2} auf die Stromreglerspannung u_{C} begonnen hat einzutreten. Somit eignet sich zur Bestimmung des Schaltzeitpunkts t_{S} insbesondere ein iteratives Verfahren, bei welchem t_{S} variiert wird, bis die drei Bedingungen eintreten. Das Umschalten der Sollspannung ist also kausal für einen Abfall der Stromreglerspannung u_{C}, insbesondere auf einen Wert unterhalb von U_{C,M}.

In einem sechsten Verfahrensschritt 106 wird nach dem zweiten Schaltzeitpunkt t_{S,2} ein zwischen den Messelektroden 3 anliegender zweiter Messspannungswert u_{M,2} der Messspannung u_{M} gemessen und unter Verwendung des ersten Messspannungswerts u_{M,1} und des zweiten Messspannungswerts u_{M,2} ein Durchfluss des Mediums 6 bestimmt, wobei auch der zweite Messspannungswert u_{M,2} im Medium 6 durch das von der Spule 7 im strömenden Medium 6 erzeugte Magnetfeld 11 bewirkt wird.

### Bezugszeichen

- 1: Magnetisch-induktives Durchflussmessgerät
- 2: Messrohr
- 3: Messelektroden
- 4: Magnetfeldgenerator
- 5: Steuerung
- 6: Medium
- 7: Spule
- 8: Brückenschaltung
- 9: Stromregler
- 10: Spannungsregler
- 11: Magnetfeld
- 12: Joch
- 13: erster Schalter
- 14: zweiter Schalter
- 15: dritter Schalter
- 16: vierter Schalter
- 17: erster Zweig
- 18: zweiter Zweig
- u: Versorgungsspannung
- U_{S,1}: erster Sollspannungswert der Versorgungsspannung
- U_{S,1}: zweiter Sollspannungswert der Versorgungsspannung
- u_{C}: Stromreglerspannung
- U_{C,M}: Minimalspannungswert der Stromreglerspannung
- U_{C,R}: Regelspannungswert der Stromreglerspannung
- u_{M}: Messspannung zwischen den Messelektroden
- u_{M,1}: erster Messspannungswert
- u_{M,2}: zweiter Messspannungswert
- i: Strom durch die Spule
- I_{S}: Sollstrom durch die Spule
- t_{S,1}: erster Schaltzeitpunkt
- t_{S,2}: zweiter Schaltzeitpunkt
- t_{U,1}: erster Umkehrzeitpunkt
- t_{U,2}: zweiter Umkehrzeitpunkt

## Patentansprüche

1. Verfahren zum Betreiben eines Magnetfeldgenerators (4) für ein magnetisch-induktives Durchflussmessgerät (1),
wobei der Magnetfeldgenerator (4) eine Spule (7), eine Brückenschaltung (8) mit mindestens einem Stromregler (9), einen Spannungsregler (10) und eine Steuerung (5) aufweist,
wobei die Brückenschaltung (8) zur Leitung eines Stroms (i) durch die Spule (7) in einer Richtung ausgebildet ist, die Richtung entweder eine erste Richtung oder eine zweite Richtung ist und der Brückenschaltung (8) die Richtung von der Steuerung (5) vorgebbar ist,
wobei der Stromregler (9) zur Erzeugung des Stroms (i) gemäß einem Sollstrom durch die Spule (7) ausgebildet ist und dem Stromregler (9) der Sollstrom (I_{S}) von der Steuerung (5) vorgebbar ist,
wobei zu einem Regelbetrieb des Stromreglers (9) eine über dem Stromregler (9) anliegende Stromreglerspannung (u_{C}) größer als ein oder gleich einem Regelspannungswert (U_{C,R}) und zu einem Minimalbetrieb des Stromreglers (9) die Stromreglerspannung (u_{C}) größer als ein Minimalspannungswert (U_{C,M}) ist und der Regelspannungswert (U_{C,R}) größer als der Minimalspannungswert ist (U_{C,M}),
wobei der Spannungsregler (10) zur Erzeugung einer Versorgungsspannung (u) gemäß einer Sollspannung über der Brückenschaltung (8) ausgebildet ist und dem Spannungsregler (10) die Sollspannung von der Steuerung (5) vorgebbar ist und
wobei von der Steuerung (5) die folgenden Verfahrensschritte ausgeführt werden:
- In einem ersten Verfahrensschritt (101) werden in einem ersten Umkehrzeitpunkt (t_{U,1}) die erste Richtung, ein Sollstromwert (I_{S}) als Sollstrom und ein erster Sollspannungswert (U_{S,1}) als Sollspannung vorgegeben, wobei der erste Sollspannungswert (U_{S,1}) größer als ein zweiter Sollspannungswert (U_{S,2}) ist und der zweite Sollspannungswert (U_{S,2}) als Sollspannung den Regelspannungswert (U_{C,R}) der Stromreglerspannung (u_{C}) in einem eingeschwungenen Zustand des Magnetfeldgenerators (4) bewirkt.
- In einem zweiten Verfahrensschritt (102) wird ein erster Schaltzeitpunkt (t_{S,1}) bestimmt, welcher dadurch ausgezeichnet ist, dass er nach dem ersten Umkehrzeitpunkt (t_{U,1}) liegt, der Strom (i) zwischen dem ersten Umkehrzeitpunkt (t_{U,1}) und dem ersten Schaltzeitpunkt (t_{S,1}) den Sollstromwert (I_{S}) erreicht und die Stromreglerspannung (u_{C}) im ersten Schaltzeitpunkt (t_{S,1}) größer als der Minimalspannungswert (U_{C,M}) und kleiner als der Regelspannungswert (U_{C,R}) ist, und wird im ersten Schaltzeitpunkt (t_{S,1}) der zweite Sollspannungswert (U_{S,2}) als Sollspannung vorgegeben.

2. Verfahren nach Anspruch 1, wobei von der Steuerung (5) die folgenden Verfahrensschritte in Anschluss an den zweiten Verfahrensschritt ausgeführt werden:
- In einem dritten Verfahrensschritt (104) werden in einem zweiten Umkehrzeitpunkt (t_{U,2}) die zweite Richtung und der erste Sollspannungswert (U_{S,1}) als Sollspannung vorgegeben.
- In einem vierten Verfahrensschritt (105) wird ein zweiter Schaltzeitpunkt (t_{S,2}) bestimmt, welcher **dadurch gekennzeichnet ist, dass** der zweite Schaltzeitpunkt (t_{S,2}) nach dem zweiten Umkehrzeitpunkt (t_{U,2}) liegt, der Strom (i) zwischen dem zweiten Umkehrzeitpunkt (t_{U,2}) und dem zweiten Schaltzeitpunkt (t_{S,2}) den Sollstromwert (I_{S}) erreicht und die Stromreglerspannung (u_{C}) im zweiten Schaltzeitpunkt (t_{S,2}) größer als der Minimalspannungswert (U_{C,M}) und kleiner als der Regelspannungswert (U_{C,R}) ist, und wird im zweiten Schaltzeitpunkt (t_{S,2}) der zweite Sollspannungswert (U_{S,2}) als Sollspannung vorgegeben.

3. Verfahren nach Anspruch 2, wobei der erste Verfahrensschritt (101), der zweite Verfahrensschritt (102), der dritte Verfahrensschritt (104) und der vierte Verfahrensschritt (105) mindestens zwei Mal in dieser Reihenfolge ausgeführt werden.

4. Verfahren zum Betreiben eines magnetisch-induktives Durchflussmessgeräts (1),
wobei das magnetisch-induktive Durchflussmessgerät (1) ein Messrohr (2), zwei Messelektroden (3), einen Magnetfeldgenerator (4) und eine Steuerung (5) aufweist,
wobei der Magnetfeldgenerator (4) eine Spule (7), eine Brückenschaltung (8) mit mindestens einem Stromregler (9) und einen Spannungsregler (10) aufweist,
wobei die Brückenschaltung (8) zur Leitung eines Stroms (i) durch die Spule (7) in einer Richtung ausgebildet ist, die Richtung entweder eine erste Richtung oder eine zweite Richtung ist und der Brückenschaltung (8) die Richtung von der Steuerung (5) vorgebbar ist,
wobei der Stromregler (9) zur Erzeugung des Stroms (i) gemäß einem Sollstrom durch die Spule (7) ausgebildet ist und dem Stromregler (9) der Sollstrom von der Steuerung (5) vorgebbar ist,
wobei zu einem Regelbetrieb des Stromreglers (9) eine über dem Stromregler (9) anliegende Stromreglerspannung (u_{C}) größer als ein oder gleich einem Regelspannungswert (U_{C,R}) und zu einem Minimalbetrieb des Stromreglers (9) die Stromreglerspannung (u_{C}) größer als ein Minimalspannungswert (U_{C,M}) ist und der Regelspannungswert (U_{C,R}) größer als der Minimalspannungswert (U_{C,M}) ist,
wobei der Spannungsregler (10) zur Erzeugung einer Versorgungsspannung (u_{C}) gemäß einer Sollspannung über der Brückenschaltung (8) ausgebildet ist und dem Spannungsregler (10) die Sollspannung von der Steuerung (5) vorgebbar ist und
wobei ein Medium (6) durch das Messrohr (2) geströmt wird,
wobei von der Steuerung (5) die folgenden Verfahrensschritte ausgeführt werden:
- In einem ersten Verfahrensschritt (101) werden in einem ersten Umkehrzeitpunkt (t_{U,1}) die erste Richtung, ein Sollstromwert (I_{S}) und ein erster Sollspannungswert (U_{S,1}) vorgegeben, wobei der erste Sollspannungswert (U_{S,1}) größer als ein zweiter Sollspannungswert (U_{S,2}) ist und der zweite Sollspannungswert (U_{S,2}) als Sollspannung den Regelspannungswert (U_{C,R}) der Stromreglerspannung (u_{C}) in einem eingeschwungenen Zustand des Magnetfeldgenerators (4) bewirkt.
- In einem zweiten Verfahrensschritt (102) wird ein erster Schaltzeitpunkt (t_{S,1}) bestimmt, welcher dadurch ausgezeichnet ist, dass er nach dem ersten Umkehrzeitpunkt (t_{U,1}) liegt, der Strom (i) zwischen dem ersten Umkehrzeitpunkt (t_{U,1}) und dem ersten Schaltzeitpunkt (t_{S,1}) den Sollstromwert (I_{S}) erreicht und die Stromreglerspannung (u_{C}) im ersten Schaltzeitpunkt (t_{S,1}) größer als der Minimalspannungswert (U_{C,M}) und kleiner als der Regelspannungswert (U_{C,R}) ist, und wird im ersten Schaltzeitpunkt (t_{S,1}) der zweite Sollspannungswert (U_{S,2}) als Sollspannung vorgegeben.
- In einem dritten Verfahrensschritt (103) wird nach dem ersten Schaltzeitpunkt (t_{S,1}) und vor einem zweiten Umkehrzeitpunkt (t_{U,2}) eine zwischen den Messelektroden (3) anliegende erste Messspannung (u_{M,1}) gemessen und unter Verwendung der ersten Messspannung (u_{M,1}) ein Durchfluss des Mediums (6) bestimmt, wobei die erste Messspannung (u_{M,1}) im Medium (6) durch ein von der Spule (7) im strömenden Medium (7) erzeugtes Magnetfeld (11) bewirkt wird.

5. Verfahren nach Anspruch 4, wobei von der Steuerung (5) die folgenden Verfahrensschritte in Anschluss an den dritten Verfahrensschritt (103) ausgeführt werden:
- In einem vierten Verfahrensschritt (104) werden im zweiten Umkehrzeitpunkt (t_{U,2}) die zweite Richtung und der erste Sollspannungswert (U_{S,1}) als Sollspannung vorgegeben.
- In einem fünften Verfahrensschritt (105) wird ein zweiter Schaltzeitpunkt (t_{S,2}) bestimmt, welcher **dadurch gekennzeichnet ist, dass** der zweite Schaltzeitpunkt (t_{S,2}) nach dem zweiten Umkehrzeitpunkt (t_{U,2}) liegt, der Strom (i) zwischen dem zweiten Umkehrzeitpunkt (t_{U,2}) und dem zweiten Schaltzeitpunkt (t_{S,2}) den Sollstromwert (I_{S}) erreicht und die Stromreglerspannung (u_{C}) im zweiten Schaltzeitpunkt (t_{S,2}) größer als der Minimalspannungswert (U_{C,M}) und kleiner als der Regelspannungswert (U_{C,R}) ist, und wird im zweiten Schaltzeitpunkt (t_{S,2}) der zweite Sollspannungswert (U_{S,2}) als Sollspannung vorgegeben.
- In einem sechsten Verfahrensschritt (106) wird nach dem zweiten Schaltzeitpunkt (t_{S,2}) eine zwischen den Messelektroden (3) anliegende zweite Messspannung (u_{M,2}) gemessen und unter Verwendung der ersten Messspannung (u_{M,1}) und der zweiten Messspannung (u_{M,2}) ein Durchfluss des Mediums (6) bestimmt, wobei die zweite Messspannung (u_{M,2}) im Medium (6) durch ein von der Spule (7) im strömenden Medium (6) erzeugtes Magnetfeld (11) bewirkt wird.

6. Verfahren nach Anspruch 5, wobei der erste Verfahrensschritt (101), der zweite Verfahrensschritt (102), der dritte Verfahrensschritt (103), der vierte Verfahrensschritt (104), der fünfte Verfahrensschritt (105) und der sechste Verfahrensschritt (106) mindestens zwei Mal in dieser Reihenfolge ausgeführt werden.

7. Verfahren nach einem der Ansprüche 1 bis 6, wobei von der Steuerung (5) der mindestens eine Schaltzeitpunkt (t_{S,1}, t_{S,2}) iterativ bestimmt wird, indem ein zeitlicher Abstand zwischen dem mindestens einen Umkehrzeitpunkt (t_{U,1}, t_{U,2}) und dem mindestens einen Schaltzeitpunkt (t_{S,1}, t_{S,2}) schrittweise reduziert wird, bis die Stromreglerspannung (u_{C}) im mindestens einen Schaltzeitpunkt (t_{S,1}, t_{S,2}) größer als der Minimalspannungswert (U_{C,M}) und kleiner als der Regelspannungswert (U_{C,R}) ist, vorzugsweise gleich dem Minimalspannungswert (U_{C,M}) ist.

8. Verfahren nach einem der Ansprüche 1 bis 6, wobei der Regelspannungswert (U_{C,R}) zwischen 2,5 V und 3,5 V, vorzugsweise bei 3 V liegt.

9. Verfahren nach einem der Ansprüche 1 bis 7, wobei der Minimalspannungswert (U_{C,M}) zwischen 1,5 V und 2,5 V, vorzugsweise bei 2 V liegt.

10. Magnetfeldgenerator (4) für ein magnetisch-induktives Durchflussmessgerät (1) mit einer Spule (7), einer Brückenschaltung (8) mit mindestens einem Stromregler (9), einem Spannungsregler (10) und einer Steuerung (5), wobei die Brückenschaltung (8) zur Leitung eines Stroms (i) durch die Spule (7) in einer Richtung ausgebildet ist, die Richtung entweder eine erste Richtung oder eine zweite Richtung ist und der Brückenschaltung (8) die Richtung von der Steuerung (5) vorgebbar ist,
wobei der Stromregler (9) zur Erzeugung des Stroms (i) gemäß einem Sollstrom durch die Spule (7) ausgebildet ist und dem Stromregler (9) der Sollstrom von der Steuerung (5) vorgebbar ist,
wobei zu einem Regelbetrieb des Stromreglers (9) eine über dem Stromregler (9) anliegende Stromreglerspannung (u_{C}) größer als ein oder gleich einem Regelspannungswert (U_{C,R}) und zu einem Minimalbetrieb des Stromreglers (9) die Stromreglerspannung (u_{C}) größer als ein Minimalspannungswert (U_{C,M}) ist und der Regelspannungswert (U_{C,R}) größer als der Minimalspannungswert (U_{C,M}) ist,
wobei der Spannungsregler (10) zur Erzeugung einer Versorgungsspannung (u) gemäß einer Sollspannung über der Brückenschaltung (8) ausgebildet ist und dem Spannungsregler (10) die Sollspannung von der Steuerung (5) vorgebbar ist,
wobei die Steuerung (5) ausgebildet ist, in einem ersten Umkehrzeitpunkt (t_{U,1}) die erste Richtung, einen Sollstromwert (I_{S}) als Sollstrom und einen erster Sollspannungswert (U_{S,1}) als Sollspannung vorzugeben, wobei der erste Sollspannungswert (U_{S,1}) größer als ein zweiter Sollspannungswert (U_{S,2}) ist und der zweite Sollspannungswert (U_{S,2}) als Sollspannung den Regelspannungswert (U_{C,R}) der Stromreglerspannung (u_{C}) in einem eingeschwungenen Zustand des Magnetfeldgenerators (4) bewirkt,
wobei die Steuerung (5) weiter ausgebildet ist, einen ersten Schaltzeitpunkt (t_{S,1}) zu bestimmen, welcher dadurch ausgezeichnet ist, dass er nach dem ersten Umkehrzeitpunkt (t_{U,1}) liegt, der Strom (i) zwischen dem ersten Umkehrzeitpunkt (t_{U,1}) und dem ersten Schaltzeitpunkt (t_{S,1}) den Sollstromwert (I_{S}) erreicht und die Stromreglerspannung (u_{C}) im ersten Umkehrzeitpunkt (t_{U,1}) größer als der Minimalspannungswert (U_{C,M}) und kleiner als der Regelspannungswert (U_{C,R}) ist, und im ersten Schaltzeitpunkt (t_{S,1}) dann den zweiten Sollspannungswert (U_{S,2}) als Sollspannung vorzugeben.

11. Magnetfeldgenerator (4) nach Anspruch 10, **dadurch gekennzeichnet, dass** die Brückenschaltung (8) einen ersten Zweig (17) mit einem Stromregler (9) und einen zweiten Zweig (18) mit einem Stromregler (9) aufweist und dass vorzugsweise die Stromregler (9) durch die Steuerung (5) schaltbar ausgebildet sind.

12. Magnetfeldgenerator (4) nach Anspruch 10 oder 11, **dadurch gekennzeichnet, dass** die Steuerung (5) zur Ausführung eines Verfahrens nach einem der Ansprüche 1 bis 9 ausgebildet ist.

13. Magnetisch-induktives Durchflussmessgerät (1) mit einem Messrohr (2), zwei Messelektroden (3), einem Magnetfeldgenerator (4) und einer Steuerung (5),
wobei der Magnetfeldgenerator (5) eine Spule (7), eine Brückenschaltung (8) mit mindestens einem Stromregler (9) und einen Spannungsregler (10) aufweist und ausgebildet ist, mit der Spule (7) ein Magnetfeld (11) in einem im Messrohr (2) strömenden Medium (6) zu erzeugen, welches eine an den Messelektroden (3) abgreifbare Messspannung (u_{M}) in das Medium (6) induziert,
wobei die Brückenschaltung (8) zur Leitung eines Stroms (i) durch die Spule (7) in einer Richtung ausgebildet ist, die Richtung entweder eine erste Richtung oder eine zweite Richtung ist und der Brückenschaltung (8) die Richtung von der Steuerung (5) vorgebbar ist,
wobei der Stromregler (9) zur Erzeugung des Stroms (i) gemäß einem Sollstrom durch die Spule (7) ausgebildet ist und dem Stromregler (9) der Sollstrom von der Steuerung (5) vorgebbar ist,
wobei zu einem Regelbetrieb des Stromreglers (9) eine über dem Stromregler anliegende Stromreglerspannung (u_{C}) größer als ein oder gleich einem Regelspannungswert (U_{C,R}) und zu einem Minimalbetrieb des Stromreglers (9) die Stromreglerspannung (u_{C}) größer als ein Minimalspannungswert (U_{C,M}) ist und der Regelspannungswert (U_{C,R}) größer als der Minimalspannungswert (U_{C,M}) ist,
wobei der Spannungsregler (10) zur Erzeugung einer Versorgungsspannung (u) gemäß einer Sollspannung über der Brückenschaltung (8) ausgebildet ist und dem Spannungsregler (10) die Sollspannung von der Steuerung (5) vorgebbar ist,
wobei die Steuerung (5) ausgebildet ist, in einem ersten Umkehrzeitpunkt (t_{U,1}) die erste Richtung, einen Sollstromwert (I_{S}) und einen erster Sollspannungswert (U_{S,1}) vorzugeben, wobei der erste Sollspannungswert (U_{S,1}) größer als ein zweiter Sollspannungswert (U_{S,2}) ist und der zweite Sollspannungswert (U_{S,2}) als Sollspannung den Regelspannungswert (U_{C,R}) der Stromreglerspannung (u_{C}) in einem eingeschwungenen Zustand des Magnetfeldgenerators (4) bewirkt und
wobei die Steuerung (5) weiter ausgebildet ist, nach einem ersten Schaltzeitpunkt (t_{S,1}) und vor einem zweiten Umkehrzeitpunkt (t_{U,2}) eine zwischen den Messelektroden (3) anliegende erste Messspannung (u_{M,1}) zu messen und unter Verwendung der ersten Messspannung (u_{M,1}) einen Durchfluss eines Mediums (6) durch das Messrohr (2) zu bestimmen,
wobei die Steuerung (5) weiter ausgebildet ist, den ersten Schaltzeitpunkt (t_{S,1}) zu bestimmen, welcher dadurch ausgezeichnet ist, dass er nach dem ersten Umkehrzeitpunkt (t_{U,1}) liegt, der Strom (i) zwischen dem ersten Umkehrzeitpunkt (t_{U,1}) und dem ersten Schaltzeitpunkt (t_{S,1}) den Sollstromwert (I_{S}) erreicht und die Stromreglerspannung (u_{C}) im ersten Schaltzeitpunkt (t_{S,1}) größer als Minimalspannungswert (U_{C,M}) und kleiner als der Regelspannungswert (U_{C,R}) ist, und im ersten Schaltzeitpunkt (t_{S,1}) dann den zweiten Sollspannungswert (U_{S,1}) als Sollspannung vorzugeben.

14. Magnetisch-induktives Durchflussmessgerät (1) nach Anspruch 12, **dadurch gekennzeichnet, dass** der Magnetfeldgenerator (4) nach Anspruch 11 ausgebildet ist.

15. Magnetisch-induktives Durchflussmessgerät (1) nach Anspruch 13 oder 14, **dadurch gekennzeichnet, dass** die Steuerung (5) zur Ausführung eines Verfahrens nach einem der Ansprüche 1 bis 9 ausgebildet ist.

## Claims

1. Method for operating a magnetic field generator (4) for a magnetic-inductive flowmeter (1),
wherein the magnetic field generator (4) comprises a coil (7), a bridge circuit (8) with at least one current regulator (9), a voltage regulator (10) and a controller (5),
wherein the bridge circuit (8) is designed to direct a current (i) through the coil (7) in one direction, the direction being either a first direction or a second direction, and the bridge circuit (8) can be set to the direction by the controller (5),
wherein the current regulator (9) is designed to generate the current (i) according to a target current through the coil (7) and the target current (I_{S}) can be set in the current regulator (9) by the controller (5),
wherein for a control operation of the current regulator (9), a current regulator voltage (uc) present across the current regulator (9) is greater than or equal to a control voltage value (U_{C,R}) and for a minimum operation of the current regulator (9) the current regulator voltage (uc) is greater than a minimum voltage value (U_{C,M}) and the control voltage value (U_{C,R}) is greater than the minimum voltage value (U_{C,M}),
wherein the voltage regulator (10) is designed to generate a supply voltage (u) according to a target voltage across the bridge circuit (8) and the target voltage can be set in the voltage regulator (10) by the controller (5), and
wherein the following method steps are performed by the controller (5):
- In a first method step (101), the first direction, a target current value (I_{S}) as target current and a first target voltage value (U_{S,1}) as target voltage are set at a first reversal time (t_{U,1}), wherein the first target voltage value (U_{S,1}) is greater than a second target voltage value (U_{S,2}) and the second target voltage value (U_{S,2}) as target voltage effects the control voltage value (U_{C,R}) of the current regulator voltage (uc) in a steady state of the magnetic field generator (4).
- In a second method step (102), a first switching time (t_{S,1}) is determined, which is **characterized in that** it lies after the first reversal time (t_{U,1}), the current (i) between the first reversal time (t_{U,1}) and the first switching time (t_{S,1}) reaches the target current value (I_{S}) and the current regulator voltage (uc) at the first switching time (t_{S,1}) is greater than the minimum voltage value (U_{C,M}) and less than the control voltage value (U_{C,R}), and the second target voltage value (U_{S,2}) is set as the target voltage at the first switching time (t_{S,1}).

2. Method according to claim 1, wherein the following method steps are performed by the controller (5) following the second method step:
- In a third method step (104), the second direction and the first target voltage value (U_{S,1}) are set as target voltage at a second reversal time (t_{U,2}).
- In a fourth method step (105), a second switching time (t_{S,2}) is determined, which is **characterized in that** the second switching time (t_{S,2}) lies after the second reversal time (t_{U,2}), the current (i) between the second reversal time (t_{U,2}) and the second switching time (t_{S,2}) reaches the target current value (I_{S}) and the current regulator voltage (uc) at the second switching time (t_{S,2}) is greater than the minimum voltage value (U_{C,M}) and less than the control voltage value (U_{C,R}), and the second target voltage value (U_{S,2}) is set as the target voltage at the second switching time (t_{S,2}).

3. Method according to claim 2, wherein the first method step (101), the second method step (102), the third method step (104) and the fourth method step (105) are performed at least twice in this order.

4. Method for operating a magnetic-inductive flowmeter (1),
wherein the magnetic-inductive flowmeter (1) comprises a measuring tube (2), two measuring electrodes (3), a magnetic field generator (4) and a controller (5),
wherein the magnetic field generator (4) comprises a coil (7), a bridge circuit (8) with at least one current regulator (9) and a voltage regulator (10),
wherein the bridge circuit (8) is designed for directing a current (i) through the coil (7) in one direction, the direction being either a first direction or a second direction, and the bridge circuit (8) can be set to the direction by the controller (5),
wherein the current regulator (9) is designed to generate the current (i) according to a target current through the coil (7) and the target current can be set in the current regulator (9) by the controller (5),
wherein for a control operation of the current regulator (9), a current regulator voltage (uc) present across the current regulator (9) is greater than or equal to a control voltage value (U_{C,R}) and for a minimum operation of the current regulator (9), the current regulator voltage (uc) is greater than a minimum voltage value (U_{C,M}) and the control voltage value (U_{C,R}) is greater than the minimum voltage value (U_{C,M}),
wherein the voltage regulator (10) is designed to generate a supply voltage (uc) according to a target voltage across the bridge circuit (8) and the target voltage can be set in the voltage regulator (10) by the controller (5), and
wherein a medium (6) is made to flow through the measuring tube (2),
wherein the following method steps are performed by the controller (5):
- In a first method step (101), the first direction, a target current value (I_{S}) and a first target voltage value (U_{S,1}) are set at a first reversal time (t_{U,1}), wherein the first target voltage value (U_{S,1}) is greater than a second target voltage value (U_{S,2}) and the second target voltage value (U_{S,2}), as target voltage, effects the control voltage value (U_{C,R}) of the current regulator voltage (uc) in a steady state of the magnetic field generator (4).
- In a second method step (102), a first switching time (t_{S,1}) is determined, which is **characterized in that** it lies after the first reversal time (t_{U,1}), the current (i) between the first reversal time (t_{U,1}) and the first switching time (t_{S,1}) reaches the target current value (I_{S}) and the current regulator voltage (uc) at the first switching time (t_{S,1}) is greater than the minimum voltage value (U_{C,M}) and less than the control voltage value (U_{C,R}), and the second target voltage value (U_{S,2}) is set as the target voltage at the first switching time (t_{S,1}).
- In a third method step (103), after the first switching time (t_{S,1}) and before a second reversal time (t_{U,2}), a first measuring voltage (u_{M,1}) present between the measuring electrodes (3) is measured and a flow rate of the medium (6) is determined using the first measuring voltage (u_{M,1}), wherein the first measuring voltage (u_{M,1}) in the medium (6) is caused by a magnetic field (11) generated by the coil (7) in the flowing medium (7).

5. Method according to claim 4, wherein the following method steps are performed by the controller (5) following the third method step (103):
- In a fourth method step (104), the second direction and the first target voltage value (U_{S,1}) are set as target voltage at the second reversal time (t_{U,2}).
- In a fifth method step (105), a second switching time (t_{S,2}) is determined, which is **characterized in that** the second switching time (t_{S,2}) lies after the second reversal time (t_{U,2}), the current (i) between the second reversal time (t_{U,2}) and the second switching time (t_{S,2}) reaches the target current value (I_{S}) and the current regulator voltage (uc) at the second switching time (t_{S,2}) is greater than the minimum voltage value (U_{C,M}) and less than the control voltage value (U_{C,R}), and the second target voltage value (U_{S,2}) is set as the target voltage at the second switching time (t_{S,2}).
- In a sixth method step (106), a second measuring voltage (u_{M,2}) present between the measuring electrodes (3) is measured after the second switching time (t_{S,2}), and a flow rate of the medium (6) is determined using the first measuring voltage (u_{M,1}) and the second measuring voltage (u_{M,2}), wherein the second measuring voltage (u_{M,2}) in the medium (6) is caused by a magnetic field (11) generated by the coil (7) in the flowing medium (6).

6. Method according to claim 5, wherein the first method step (101), the second method step (102), the third method step (103), the fourth method step (104), the fifth method step (105) and the sixth method step (106) are performed at least twice in this order.

7. Method according to any one of claims 1 to 6, wherein the at least one switching time (t_{S,1}, t_{S,2}) is determined iteratively by the controller (5), in that a time interval between the at least one reversal time (t_{U,1}, t_{U,2}) and the at least one switching time (t_{S,1}, t_{S,2}) is reduced step by step until the current regulator voltage (uc) at the at least one switching time (t_{S,1}, t_{S,2}) is greater than the minimum voltage value (U_{C,M}) and less than the control voltage value (U_{C,R}), preferably equal to the minimum voltage value (U_{C,M}).

8. Method according to any one of claims 1 to 6, wherein the control voltage value (U_{C,R}) is between 2.5 V and 3.5 V, preferably at 3 V.

9. Method according to any one of claims 1 to 7, wherein the minimum voltage value (U_{C,M}) is between 1.5 V and 2.5 V, preferably at 2 V.

10. Magnetic field generator (4) for a magnetic-inductive flowmeter (1) comprising a coil (7), a bridge circuit (8) having at least a current regulator (9), a voltage regulator (10) and a controller (5)
wherein the bridge circuit (8) is designed to direct a current (i) through the coil (7) in one direction, the direction being either a first direction or a second direction, and the bridge circuit (8) can be given the direction by the controller (5),
wherein the current regulator (9) is designed to generate the current (i) according to a target current through the coil (7) and the target current can be set in the current regulator (9) by the controller (5),
wherein for a control operation of the current regulator (9), a current regulator voltage (uc) present across the current regulator (9) is greater than or equal to a control voltage value (U_{C,R}) and for a minimum operation of the current regulator (9), the current regulator voltage (uc) is greater than a minimum voltage value (U_{C,M}) and the control voltage value (U_{C,R}) is greater than the minimum voltage value (U_{C,M}),
wherein the voltage regulator (10) is designed to generate a supply voltage (u) according to a target voltage across the bridge circuit (8) and the target voltage can be set in the voltage regulator (10) by the controller (5),
wherein the controller (5) is designed to set, at a first reversal time (t_{U,1}), the first direction, a target current value (I_{S}) as target current and a first target voltage value (U_{S,1}) as target voltage, wherein the first target voltage value (U_{S,1}) is greater than a second target voltage value (U_{S,2}) and the second target voltage value (U_{S,2}) as target voltage effects the control voltage value (Uc,R) of the current regulator voltage (uc) in a steady state of the magnetic field generator (4),
wherein the controller (5) is further designed to determine a first switching time (t_{S,1}) which is **characterized in that** it is after the first reversing time (t_{U,1}), the current (i) between the first reversing time (t_{U,1}) and the first switching time (t_{S,1}) reaches the target current value (I_{S}) and the current regulator voltage (uc) at the first switching time (t_{U,1}) is greater than the minimum voltage value (U_{C,M}) and less than the control voltage value (U_{C,R}), and at the first switching time (t_{S,1}) the second target voltage value (U_{S,2}) is then set as the target voltage.

11. Magnetic field generator (4) according to claim 10, **characterized in that** the bridge circuit (8) has a first branch (17) with a current regulator (9) and a second branch (18) with a current regulator (9), and **in that** preferably the current regulators (9) are designed to be switchable by the controller (5).

12. Magnetic field generator (4) according to claim 10 or 11, **characterized in that** the controller (5) is designed to perform a method according to any one of claims 1 to 9.

13. Magnetic-inductive flowmeter (1) with a measuring tube (2), two measuring electrodes (3), a magnetic field generator (4) and a controller (5),
wherein the magnetic field generator (5) comprises a coil (7), a bridge circuit (8) with at least one current regulator (9) and a voltage regulator (10) and is designed to generate a magnetic field (11) in a medium (6) flowing in the measuring tube (2) by means of the coil (7), which magnetic field induces a measuring voltage (u_{M}) in the medium (6) which can be tapped at the measuring electrodes (3),
wherein the bridge circuit (8) is designed to direct a current (i) through the coil (7) in one direction, the direction being either a first direction or a second direction, and the bridge circuit (8) can be set to the direction by the controller (5),
wherein the current regulator (9) is designed to generate the current (i) according to a target current through the coil (7) and the target current can be set in the current regulator (9) by the controller (5),
wherein, for a control operation of the current regulator (9), a current regulator voltage (uc) present across the current regulator is greater than or equal to a control voltage value (U_{C,R}) and, for a minimum operation of the current regulator (9), the current regulator voltage (uc) is greater than a minimum voltage value (U_{C,M}) and the control voltage value (U_{C,R}) is greater than the minimum voltage value (U_{C,M}),
wherein the voltage regulator (10) is designed to generate a supply voltage (u) according to a target voltage across the bridge circuit (8), and the target voltage can be set in the voltage regulator (10) by the controller (5),
wherein the controller (5) is designed to set, at a first reversal time (t_{U,1}), the first direction, a target current value (I_{S}) and a first target voltage value (U_{S,1}), wherein the first target voltage value (U_{S,1}) is greater than a second target voltage value (U_{S,2}) and the second target voltage value (U_{S,2}), as target voltage, effects the control voltage value (U_{C,R}) of the current regulator voltage (uc) in a steady state of the magnetic field generator (4), and
wherein the controller (5) is further designed to measure a first measuring voltage (u_{M,1}) present between the measuring electrodes (3) after a first switching time (t_{S,1}) and before a second reversal time (t_{U,2}) and to determine a flow rate of a medium (6) through the measuring tube (2) using the first measuring voltage (u_{M,1}),
wherein the controller (5) is further designed to determine the first switching time (t_{S,1}), which is **characterized in that** it is after the first reversal time (t_{U,1}), the current (i) between the first reversal time (t_{U,1}) and the first switching time (t_{S,1}) reaches the target current value (I_{S}) and the current regulator voltage (uc) at the first switching time (t_{S,1}) is greater than the minimum voltage value (U_{C,M}) and less than the control voltage value (U_{C,R}), and at the first switching time (t_{S,1}) the second target voltage value (U_{S,1}) is then set as the target voltage.

14. Magnetic-inductive flowmeter (1) according to claim 12, **characterized in that** the magnetic field generator (4) is designed according to claim 11.

15. Magnetic-inductive flowmeter (1) according to claim 13 or 14, **characterized in that** the controller (5) is designed to perform a method according to any one of claims 1 to 9.

## Revendications

1. Procédé de fonctionnement d'un générateur de champ magnétique (4) pour un débitmètre magnéto-inductif (1), le générateur de champ magnétique (4) comportant une bobine (7), un circuit en pont (8) doté d'au moins un régulateur de courant (9), un régulateur de tension (10) et un dispositif de commande (5),
le circuit en pont (8) étant conçu pour conduire un courant (i) à travers la bobine (7) dans une direction, la direction étant soit une première direction soit une deuxième direction et la direction pouvant être prédéfinie pour le circuit en pont (8) par le dispositif de commande (5),
le régulateur de courant (9) étant conçu pour générer le courant (i) conformément à un courant de consigne à travers la bobine (7) et le courant de consigne (I_{S}) pouvant être prédéfini pour le régulateur de courant (9) par le dispositif de commande (5),
pour un mode de régulation du régulateur de courant (9), une tension de régulateur de courant (u_{C}) présente aux bornes du régulateur de courant (9) étant supérieure ou égale à une valeur de tension de régulation (U_{C,R}) et, pour un mode minimal du régulateur de courant (9), la tension de régulateur de courant (u_{C}) étant supérieure à une valeur de tension minimale (U_{C,M}) et la valeur de tension de régulation (U_{C,R}) étant supérieure à la valeur de tension minimale (U_{C,M}),
le régulateur de tension (10) étant conçu pour générer une tension d'alimentation (u) conformément à une tension de consigne aux bornes du circuit en pont (8) et la tension de consigne pouvant être prédéfinie pour le régulateur de tension (10) par le dispositif de commande (5), et
les étapes de procédé suivantes étant exécutées par le dispositif de commande (5) :
- Lors d'une première étape de procédé (101), à un premier instant d'inversion (t_{U,1}), la première direction, une valeur de courant de consigne (I_{S}) en tant que courant de consigne et une première valeur de tension de consigne (U_{S,1}) en tant que tension de consigne étant prédéfinies, la première valeur de tension de consigne (U_{S,1}) étant supérieure à une deuxième valeur de tension de consigne (U_{S,2}) et la deuxième valeur de tension de consigne (U_{S,2}) en tant que tension de consigne, dans un état stabilisé du générateur de champ magnétique (4), produisant la valeur de tension de régulation (U_{C,R}) de la tension de régulateur de courant (u_{C}).
- Lors d'une deuxième étape de procédé (102), un premier instant de commutation (t_{S,1}) est déterminé, lequel est **caractérisé par le fait qu'**il se situe après le premier instant d'inversion (t_{U,1}), que le courant (i), entre le premier instant d'inversion (t_{U,1}) et le premier instant de commutation (t_{S,1}), atteint la valeur de courant de consigne (I_{S}) et que la tension de régulateur de courant (u_{C}) au premier instant de commutation (t_{S,1}) est supérieure à la valeur de tension minimale (U_{C,M}) et inférieure à la valeur de tension de régulation (U_{C,R}) et qu'au premier instant de commutation (t_{S,1}), la deuxième valeur de tension de consigne (U_{S,2}) est prédéfinie en tant que tension de consigne.

2. Procédé selon la revendication 1, dans lequel les étapes de procédé suivantes sont exécutées par le dispositif de commande (5) à la suite de la deuxième étape de procédé :
- Lors d'une troisième étape de procédé (104), à un deuxième instant d'inversion (t_{U,2}), la deuxième direction et la première valeur de tension de consigne (U_{S,1}) en tant que tension de consigne sont prédéfinies.
- Lors d'une quatrième étape de procédé (105), un deuxième instant de commutation (t_{S,2}) est déterminé, lequel est **caractérisé par le fait que** le deuxième instant de commutation (t_{S,2}) se situe après le deuxième instant d'inversion (t_{U,2}), que le courant (i), entre le deuxième instant d'inversion (t_{U,2}) et le deuxième instant de commutation (t_{S,2}), atteint la valeur de courant de consigne (I_{S}) et que la tension de régulateur de courant (u_{C}) au deuxième instant de commutation (t_{S,2}) est supérieure à la valeur de tension minimale (U_{C,M}) et inférieure à la valeur de tension de régulation (U_{C,R}) et qu'au deuxième instant de commutation (t_{S,2}), la deuxième valeur de tension de consigne (U_{S,2}) est prédéfinie en tant que tension de consigne.

3. Procédé selon la revendication 2, dans lequel la première étape de procédé (101), la deuxième étape de procédé (102), la troisième étape de procédé (104) et la quatrième étape de procédé (105) sont exécutées au moins deux fois dans cet ordre.

4. Procédé de fonctionnement d'un débitmètre magnéto-inductif (1),
le débitmètre magnéto-inductif (1) comportant un tube de mesure (2), deux électrodes de mesure (3), un générateur de champ magnétique (4) et un dispositif de commande (5), le générateur de champ magnétique (4) comportant une bobine (7), un circuit en pont (8) doté d'au moins un régulateur de courant (9) et un régulateur de tension (10),
le circuit en pont (8) étant conçu pour conduire un courant (i) à travers la bobine (7) dans une direction, la direction étant soit une première direction soit une deuxième direction et la direction pouvant être prédéfinie pour le circuit en pont (8) par le dispositif de commande (5),
le régulateur de courant (9) étant conçu pour générer le courant (i) conformément à un courant de consigne à travers la bobine (7) et le courant de consigne pouvant être prédéfini pour le régulateur de courant (9) par le dispositif de commande (5),
pour un mode de régulation du régulateur de courant (9), une tension de régulateur de courant (u_{C}) présente aux bornes du régulateur de courant (9) étant supérieure ou égale à une valeur de tension de régulation (U_{C,R}) et, pour un mode minimal du régulateur de courant (9), la tension de régulateur de courant (u_{C}) étant supérieure à une valeur de tension minimale (U_{C,M}) et la valeur de tension de régulation (U_{C,R}) étant supérieure à la valeur de tension minimale (U_{C,M}),
le régulateur de tension (10) étant conçu pour générer une tension d'alimentation (u_{C}) conformément à une tension de consigne aux bornes du circuit en pont (8) et la tension de consigne pouvant être prédéfinie pour le régulateur de tension (10) par le dispositif de commande (5), et
un milieu (6) étant amené à s'écouler à travers le tube (2),
les étapes de procédé suivantes étant exécutées par le dispositif de commande (5) :
- Lors d'une première étape de procédé (101), à un premier instant d'inversion (t_{U,1}), la première direction, une valeur de courant de consigne (I_{S}) et une première valeur de tension de consigne (U_{S,1}) étant prédéfinies, la première valeur de tension de consigne (U_{S,1}) étant supérieure à une deuxième valeur de tension de consigne (U_{S,2}) et la deuxième valeur de tension de consigne (U_{S,2}) en tant que tension de consigne produisant, dans un état stabilisé du générateur de champ magnétique (4), la valeur de tension de régulation (U_{C,R}) de la tension de régulateur de courant (u_{C}).
- Lors d'une deuxième étape de procédé (102), un premier instant de commutation (t_{S,1}) est déterminé, lequel est **caractérisé par le fait qu'**il se situe après le premier instant d'inversion (t_{U,1}), que le courant (i), entre le premier instant d'inversion (t_{U,1}) et le premier instant de commutation (t_{S,1}), atteint la valeur de courant de consigne (I_{S}) et que la tension de régulateur de courant (u_{C}) au premier instant de commutation (t_{S,1}) est supérieure à la valeur de tension minimale (U_{C,M}) et inférieure à la valeur de tension de régulation (U_{C,R}) et qu'au premier instant de commutation (t_{S,1}), la deuxième valeur de tension de consigne (U_{S,2}) est prédéfinie en tant que tension de consigne.
Lors d'une troisième étape de procédé (103), après le premier instant de commutation (t_{S,1}) et avant un deuxième instant d'inversion (t_{U,2}), une première tension de mesure (u_{M,1}) présente entre les électrodes de mesure (3) est mesurée et un débit du milieu (6) est déterminé en utilisant la première tension de mesure (u_{M,1}), la première tension de mesure (u_{M,1}) étant produite dans le milieu (6) par un champ magnétique (11) généré par la bobine (7) dans le milieu (7) en écoulement.

5. Procédé selon la revendication 4, dans lequel les étapes de procédé suivantes sont exécutées par le dispositif de commande (5) à la suite de la troisième étape de procédé (103) :
- Lors d'une quatrième étape de procédé (104), à un deuxième instant d'inversion (t_{U,2}), la deuxième direction et la première valeur de tension de consigne (U_{S,1}) en tant que tension de consigne sont prédéfinies.
- Lors d'une cinquième étape de procédé (105), un deuxième instant de commutation (t_{S,2}) est déterminé, lequel est **caractérisé par le fait que** le deuxième instant de commutation (t_{S,2}) se situe après le deuxième instant d'inversion (t_{U,2}), que le courant (i), entre le deuxième instant d'inversion (t_{U,2}) et le deuxième instant de commutation (t_{S,2}), atteint la valeur de courant de consigne (I_{S}) et que la tension de régulateur de courant (u_{C}) au deuxième instant de commutation (t_{S,2}) est supérieure à la valeur de tension minimale (U_{C,M}) et inférieure à la valeur de tension de régulation (U_{C,R}) et qu'au deuxième instant de commutation (t_{S,2}), la deuxième valeur de tension de consigne (U_{S,2}) est prédéfinie en tant que tension de consigne.
- Lors d'une sixième étape de procédé (106), après le deuxième instant de commutation (t_{S,2}), une deuxième tension de mesure (u_{M,2}) présente entre les électrodes de mesure (3) est mesurée et un débit du milieu (6) est déterminé en utilisant la première tension de mesure (u_{M,1}) et la deuxième tension de mesure (u_{M,2}), la deuxième tension de mesure (u_{M,2}) étant produite dans le milieu (6) par un champ magnétique (11) généré par la bobine (7) dans le milieu (6) en écoulement.

6. Procédé selon la revendication 5, dans lequel la première étape de procédé (101), la deuxième étape de procédé (102), la troisième étape de procédé (103), la quatrième étape de procédé (104), la cinquième étape de procédé (105) et la sixième étape de procédé (106) sont exécutées au moins deux fois dans cet ordre.

7. Procédé selon l'une des revendications 1 à 6, dans lequel le dispositif de commande (5) détermine de manière itérative l'au moins un instant de commutation (t_{S,1}, t_{S,2}) en réduisant progressivement un intervalle de temps entre l'au moins un instant d'inversion (t_{U,1}, t_{U,2}) et l'au moins un instant de commutation (t_{S,1}, t_{S,2}) jusqu'à ce que la tension de régulateur de courant (u_{C}) à l'au moins un instant de commutation (t_{S,1}, t_{S,2}) soit supérieure à la valeur de tension minimale (U_{C,M}) et inférieure à la valeur de tension de régulation (U_{C,R}), de préférence égale à la valeur de tension minimale (U_{C,M}).

8. Procédé selon l'une des revendications 1 à 6, dans lequel la valeur de tension de régulation (U_{C,R}) se situe entre 2,5 V et 3,5 V, de préférence à 3 V.

9. Procédé selon l'une des revendications 1 à 7, dans lequel la valeur de tension minimale (U_{C,M}) se situe entre 1,5 V et 2,5 V, de préférence à 2 V.

10. Générateur de champ magnétique (4) pour un débitmètre magnéto-inductif (1) comportant une bobine (7), un circuit en pont (8) doté d'au moins un régulateur de courant (9), un régulateur de tension (10) et un dispositif de commande (5),
le circuit en pont (8) étant conçu pour conduire un courant (i) à travers la bobine (7) dans une direction, la direction étant soit une première direction soit une deuxième direction et la direction pouvant être prédéfinie pour le circuit en pont (8) par le dispositif de commande (5),
le régulateur de courant (9) étant conçu pour générer le courant (i) conformément à un courant de consigne à travers la bobine (7) et le courant de consigne pouvant être prédéfini pour le régulateur de courant (9) par le dispositif de commande (5),
pour un mode de régulation du régulateur de courant (9), une tension de régulateur de courant (u_{C}) présente aux bornes du régulateur de courant (9) étant supérieure ou égale à une valeur de tension de régulation (U_{C,R}) et, pour un mode minimal du régulateur de courant (9), la tension de régulateur de courant (u_{C}) étant supérieure à une valeur de tension minimale (U_{C,M}) et la valeur de tension de régulation (U_{C,R}) étant supérieure à la valeur de tension minimale (U_{C,M}),
le régulateur de tension (10) étant conçu pour générer une tension d'alimentation (u) conformément à une tension de consigne aux bornes du circuit en pont (8) et la tension de consigne pouvant être prédéfinie pour le régulateur de tension (10) par le dispositif de commande (5),
le dispositif de commande (5) étant conçu pour prédéfinir, lors d'un premier instant d'inversion (t_{U,1}), la première direction, une valeur de courant de consigne (IS) en tant que courant de consigne et une première valeur de tension de consigne (U_{S,1}) en tant que tension de consigne, la première
valeur de tension de consigne (U_{S,1}) étant supérieure à une deuxième valeur de tension de consigne (U_{S,2}) et la deuxième valeur de tension de consigne (U_{S,2}) en tant que tension de consigne produisant, dans un état stabilisé du générateur de champ magnétique (4), la valeur de tension de régulation (U_{C,R}) de la tension de régulateur de courant (u_{C}),
le dispositif de commande (5) étant en outre conçu pour déterminer un premier instant de commutation (t_{S,1}), lequel est **caractérisé par le fait qu'**il se situe après le premier instant d'inversion (t_{U,1}), que le courant (i), entre le premier instant d'inversion (t_{U,1}) et le premier instant de commutation (t_{S,1}), atteint la valeur de courant de consigne (I_{S}) et que la tension de régulateur de courant (u_{C}) au premier instant d'inversion (t_{U,1}) est supérieure à la valeur de tension minimale (U_{C,M}) et inférieure à la valeur de tension de régulation (U_{C,R}), et pour prédéfinir ensuite, au premier instant de commutation (t_{S,1}), la deuxième valeur de tension de consigne (U_{S,2}) en tant que tension de consigne.

11. Générateur de champ magnétique (4) selon la revendication 10, **caractérisé en ce que** le circuit en pont (8) comporte une première branche (17) dotée d'un régulateur de courant (9) et une deuxième branche (18) dotée d'un régulateur de courant (9) et **en ce que** les régulateurs de courant (9) sont de préférence conçus pour être commutables par le dispositif de commande (5).

12. Générateur de champ magnétique (4) selon la revendication 10 ou 11, **caractérisé en ce que** le dispositif de commande (5) est conçu pour mettre en œuvre un procédé selon l'une des revendications 1 à 9.

13. Débitmètre magnéto-inductif (1) comportant un tube de mesure (2), deux électrodes de mesure (3), un générateur de champ magnétique (4) et un dispositif de commande (5),
le générateur de champ magnétique (5) comportant une bobine (7), un circuit en pont (8) doté d'au moins un régulateur de courant (9) et d'un régulateur de tension (10) et étant conçu pour générer, au moyen de la bobine (7), un champ magnétique (11) dans un milieu (6) s'écoulant dans le tube de mesure (2), lequel champ magnétique induit une tension de mesure (u_{M}) pouvant être prélevée au niveau des électrodes de mesure (3) dans le milieu (6),
le circuit en pont (8) étant conçu pour conduire un courant (i) à travers la bobine (7) dans une direction, la direction étant soit une première direction soit une deuxième direction et la direction pouvant être prédéfinie pour le circuit en pont (8) par le dispositif de commande (5),
le régulateur de courant (9) étant conçu pour générer le courant (i) conformément à un courant de consigne à travers la bobine (7) et le courant de consigne pouvant être prédéfini pour le régulateur de courant (9) par le dispositif de commande (5),
pour un mode de régulation du régulateur de courant (9), une tension de régulateur de courant (u_{C}) présente aux bornes du régulateur de courant étant supérieure ou égale à une valeur de tension de régulation (U_{C,R}) et, pour un mode minimal du régulateur de courant (9), la tension de régulateur de courant (u_{C}) étant supérieure à une valeur de tension minimale (U_{C,M}) et la valeur de tension de régulation (U_{C,R}) étant supérieure à la valeur de tension minimale (U_{C,M}),
le régulateur de tension (10) étant conçu pour générer une tension d'alimentation (u) conformément à une tension de consigne aux bornes du circuit en pont (8) et la tension de consigne pouvant être prédéfinie pour le régulateur de tension (10) par le dispositif de commande (5),
le dispositif de commande (5) étant conçu pour prédéfinir, à un premier instant d'inversion (t_{U,1}), la première direction, une valeur de courant de consigne (I_{S}) et une première valeur de tension de consigne (U_{S,1}), la première valeur de tension de consigne (U_{S,1}) étant supérieure à une deuxième valeur de tension de consigne (U_{S,2}) et la deuxième valeur de tension de consigne (U_{S,2}) en tant que tension de consigne produisant, dans un état stabilisé du générateur de champ magnétique (4), la valeur de tension de régulation (U_{C,R}) de la tension de régulateur de courant (u_{C}) et
le dispositif de commande (5) étant en outre conçu pour mesurer, après un premier instant de commutation (t_{S,1}) et avant un deuxième instant d'inversion (t_{U,2}), une première tension de mesure (u_{M,1}) présente entre les électrodes de mesure (3) et pour déterminer, en utilisant la première tension de mesure (u_{M,1}), un débit d'un milieu (6) à travers le tube de mesure (2),
le dispositif de commande (5) étant en outre conçu pour déterminer le premier instant de commutation (t_{S,1}), lequel est **caractérisé par le fait qu'**il se situe après le premier instant d'inversion (t_{U,1}), que le courant (i), entre le premier instant d'inversion (t_{U,1}) et le premier instant de commutation (t_{S,1}), atteint la valeur de courant de consigne (I_{S}) et que la tension de régulateur de courant (u_{C}) au premier instant d'inversion (t_{U,1}) est supérieure à la valeur de tension minimale (U_{C,M}) et inférieure à la valeur de tension de régulation (U_{C,R}), et pour prédéfinir ensuite, au premier instant de commutation (t_{S,1}), la deuxième valeur de tension de consigne (U_{S,1}) en tant que tension de consigne.

14. Débitmètre magnéto-inductif (1) selon la revendication 12, **caractérisé en ce que** le générateur de champ magnétique (4) est conçu selon la revendication 11.

15. Générateur de champ magnétique (1) selon la revendication 13 ou 14, **caractérisé en ce que** le dispositif de commande (5) est conçu pour mettre en œuvre un procédé selon l'une des revendications 1 à 9.
